# EUROPEAN PATENT APPLICATION

(11) **EP 3 777 542 A1**
(43) Date of publication of application: **17.02.2021**
(21) Application number: 19776838.5
(22) Date of filing: 08.03.2019
(51) Int. Cl.: A21D 10/00, A21D 2/36, A21D 13/047, A21D 13/066

(54) **BREADMAKING COMPOSITION**

(30) Priority: 30.03.2018 JP 2018070033
(71) Applicant: Yanmar Power Technology Co., Ltd., Osaka-shi Osaka 530-0013 (JP)
(72) Inventor: HASHIMOTO, Koji, Osaka-shi, Osaka 530-0013 (JP); IGUCHI, Arisa, Osaka-shi, Osaka 530-0013 (JP); SUGIYAMA, Junichi, Tsukuba-shi, Ibaraki 305-0032 (JP)
(74) Representative: Poindron, Cyrille
(86) International application number: PCT/JP2019/009496
(87) International publication number: WO 2019/188146

(57) **Abstract**

The purpose of the present invention is to provide a breadmaking composition that, without using a food additive such as a thickener, has gustatory sensations (moistness, chewiness) equivalent to or better than bread prepared using wheat flour, and with which it is possible to maintain the gustatory sensations for a long period of time. According to the present invention, a breadmaking composition is provided containing high-amylose rice that has been cooked, rice flour, and fats and oils, and when the total amount of the high-amylose rice and the rice flour is 100 parts by mass, the high-amylose rice is contained in an amount of 0.5 to 50 parts by mass, and the rice flour is contained in an amount of 50 to 99.5 parts by mass.

## Description

### TECHNICAL FIELD

The present invention relates to a breadmaking composition using high-amylose rice that has been cooked, rice flour, and fats and oils.

### BACKGROUND ART

Generally, wheat flour or rye flour is used as the main ingredient of bread products, and fermented bread having wheat flour as the main ingredient is especially preferred because it gives a soft texture. When flour and water are kneaded together to form a dough, the proteins gliadin and glutenin included in the flour form gluten, which is gum-like and viscoelastic. It is known that when this dough is fermented, carbon dioxide gas is generated, and the dough swells as a result of the gluten trapping the carbon dioxide gas. That is to say, fermented bread has good gustatory sensations such as moistness, softness, and chewiness due to the inclusion of gluten in the bread dough.

In recent years, fermented bread in which the wheat flour has been replaced with rice has become widespread. As an example of fermented bread obtained by replacing some of the wheat flour with rice, Patent Literature 1 discloses a loaf bread in which 20 to 30% of the wheat flour has been replaced with rice by using a gel-like processed rice material of high-amylose rice to obtain superior swelling and gustatory sensations.

However, because the loaf bread disclosed in Patent Literature 1 contains gluten due to the use of wheat flour, it is a fermented bread which cannot be consumed by wheat allergy patients, Celiac disease patients, and the like. Therefore, as a gluten-free fermented bread that can be consumed by these patients, the development of rice flour bread, in which the all of the wheat flour is replaced with rice, is sought. Unlike wheat flour, rice flour does not contain gliadin or glutenin, and does not produce gluten when the dough is kneaded. Therefore, when rice flour bread is produced, it is generally thought that a food additive such as a thickener must be used as an ingredient that replaces gluten, which plays the role of retaining the carbon dioxide produced by fermentation. On the other hand, health consciousness has been increasing in recent years, and there is a problem that the use of food additives such as thickeners does not meet the demand of consumers.

### CITATION LIST

### Patent Literature

Patent Literature 1: PCT International Publication No. WO 2014/199961

### DISCLOSURE OF INVENTION

### PROBLEMS TO BE SOLVED BY THE INVENTION

Therefore, an object of the present invention is to provide a breadmaking composition that, without using a food additive such as a thickener, has gustatory sensations (such as moistness and chewiness) equivalent to or better than bread produced using wheat flour, and with which it is possible to maintain the gustatory sensations for a long period of time.

Note that, even when an ingredient having a thickening action is produced from rice flour, yeast or another raw material during the breadmaking process, such an ingredient is not considered to be a "thickener" in the present application.

### MEANS FOR SOLVING THE PROBLEMS

According to the present invention, a breadmaking composition is provided which contains high-amylose rice that has been cooked, rice flour, and fats and oils, wherein when the total amount of the high-amylose rice and the rice flour is 100 parts by mass, the high-amylose rice is contained in an amount of 0.5 to 50 parts by mass, and the rice flour is contained in an amount of 50 to 99.5 parts by mass.

In the breadmaking composition described above, it is preferable that
(1) when a total amount of the high-amylose rice and the rice flour is 100 parts by mass, the high-amylose rice is contained in an amount of 0.5 to 15 parts by mass, and
(2) water is contained in an amount of 50 to 100 parts by mass per 100 parts by mass of the high-amylose rice and the rice flour in total.

### EFFECT OF THE INVENTION

The breadmaking composition of the present invention is capable of producing a bread product that, without using a food additive such as a thickener, has gustatory sensations (such as moistness and chewiness) equivalent to or better than a bread product prepared using wheat flour. Furthermore, bread products obtained from the breadmaking composition of the present invention do not readily age (readily harden), and are capable of maintaining good gustatory sensations over a long period of time, even when stored at room temperature.

In the present specification, "aging" in a bread product refers to a state where the water retention has decreased, the moistness and softness have been lost, and the bread product has become hard.

Moreover, according to the breadmaking composition of the present invention, a bread product having a sufficient swelling can be produced without the use of gluten, and further, a bread product can also be provided which is capable of maintaining the swelling over a long period of time.

Further, by including high-amylose rice that has been cooked, it is possible to provide the bread product with textures such as moistness and chewiness, even when producing a gluten-free bread product.

### DESCRIPTION OF EMBODIMENTS

In the present specification, "chewy (elastic and viscous)" refers to a texture having both an elasticity and viscosity like mochi.

The breadmaking composition of the present invention contains high-amylose rice that has been cooked, rice flour, and fats and oils as required ingredients, and an important feature is that, when the total amount of the high-amylose rice and the rice flour is 100 parts by mass, the high-amylose rice is contained in an amount of 0.5 to 50 parts by mass, and the rice flour is contained in an amount of 50 to 99.5 parts by mass.

The breadmaking composition of the present invention is for producing fermented bread which is fermented using yeast. That is to say, the bread products obtained from the breadmaking composition of the present invention do not include non-fermented bread obtained by swelling the dough with a chemical swelling agent such as baking soda or ammonium carbonate.

In the present invention, it is desirable for the high-amylose rice that has been cooked to be used in a gel state obtained as a result of a phase transition from a paste (sol) to a gel caused by subjecting the paste to a mechanical stirring process. As a result, the amylose contained in the high-amylose rice is included in the breadmaking composition in a mesh-like gel state, and because the entry of water and oil into the large number of small spaces formed inside the mesh results in the water and oil being physically surrounded by the amylose mesh, the release of the water and oil is inhibited. As a result, because the high-amylose rice that has been cooked functions as a water retention agent and an emulsifier, the aging of the bread products obtained from the breadmaking composition of the present invention is significantly inhibited.

It is also thought that, by emulsifying the fats and oils in the breadmaking composition, the emulsified fats and oils trap the carbon dioxide gas generated by fermentation, thereby making it easier for the bread dough to expand. Therefore, by using the breadmaking composition of the present invention, it is possible to produce bread products having superior gustatory sensations such as softness and chewiness without the use of gluten or a thickener or the like. Further, gustatory sensations such as moistness, softness, and chewiness are maintained for a long period of time as a result of a synergistic effect with the water retention mentioned above. As a result, it is possible to obtain bread products that do not easily age.

### (High-amylose rice)

In the breadmaking composition of the present invention, when the total amount of the high-amylose rice and the rice flour is 100 parts by mass, the high-amylose rice is contained in an amount of 0.5 to 50 parts by mass, is preferably contained in an amount of 0.5 to 15 parts by mass, and is more preferably contained in an amount of 0.7 to 10 parts by mass.

High-amylose rice is rice whose starch has a high amylose content, and although it generally refers to rice having an amylose content of 25 mass % or more, the amylose content can sometimes vary depending on the weather or the like.

The variety of high-amylose rice can be either a Japonica variety or an Indica variety, and examples include Momiroman, Yumetoiro, Hoshiyutaka, Hoshinishiki, Mirenishiki, Chugoku No. 134, Koshinokaori, and Mizuhochikara. Among the varieties mentioned above, Momiroman or Yumetoiro are preferably used. The extent of polishing of the rice does not matter, and the high-amylose rice may be in any state among brown rice, half-polished rice, and white rice. A mixture of two or more different varieties of high-amylose rice may also be used.

### (High-amylose rice that has been cooked)

In the breadmaking composition of the present invention, it is preferable for high-amylose rice that has been cooked (heated) to be used in a gel state obtained following a mechanical stirring process. As a result of using a high-amylose cooked rice in this state, the target bread product can be provided with chewiness.

Although the amount of water used when cooking (heating) the high-amylose rice depends on the amylose content of the rice, it is normally at least 0.5 times the amount of the high-amylose rice, and more specifically, it is preferably 1 to 10 times, and more preferably 2 to 6 times the amount of the high-amylose rice. When the water content is in the above ranges, the viscosity of the gel material of the cooked rice can be maintained in an appropriate range, and the obtained bread product can be provided with a chewy texture.

The high-amylose rice may be immersed in water prior to being cooked. The immersion time is not particularly limited and is usually about 10 to 120 minutes, but during winter when the water absorbency or water content of rice is relatively low, it may be desirable to immerse the rice for a duration that exceeds the above range.

The high-amylose rice can be cooked using a known heating means such as a rice cooker, a pot, a pressure cooker, an electromagnetic cooker (such as an induction heating cooker), a microwave oven, or a steam oven.

It is difficult to unambiguously identify the heating conditions such as temperature, pressure, and time because they vary depending on the heating means, the amount of water, and the like, however, the time is appropriately adjusted to allow the rice to sufficiently gelatinize without becoming burnt. For example, the adjustment may be made according to a condition mode (such as porridge mode) built into the heating means. The lower limit of the heating temperature is usually 25°C or higher, preferably 60°C or higher, and more preferably 80°C or higher. The upper limit is 130°C or lower, preferably 120°C or lower, and more preferably 100°C or lower. The heat treatment may be performed not only with heating but also with pressurization, and in this case, a temperature condition outside the above range may be preferable.

The water used for cooking (heating) is in the liquid form, and water, a substance other than water (e.g. milk, vegetable milk such as soy milk (unadjusted soy milk and adjusted soy milk), coconut milk, and almond milk, and vegetable protein), and mixtures of these substances can be appropriately selected and used according to the type of target bread product.

After the rice is cooked (heated), a cooling process may be carried out before the mechanical stirring process. As a result, it is possible to obtain a gel material having a lower viscosity than when the cooling treatment is not performed. The temperature after cooling at the time of the cooling process is normally 60°C or lower.

### (Gel material of high-amylose rice that has been cooked)

As a result of subjecting the gelatinized (sol) cooked rice obtained from the cooking (heating) process to a mechanical stirring process, a phase transition to a gel material of the high-amylose rice that has been cooked occurs. Therefore, by adjusting the conditions of the mechanical stirring process, it is possible to adjust the hardness and texture to match the target bread product.

The mechanical stirring process refers to stirring which is capable of destroying tissue by physical movement, and is different from a simple mixing process. The mechanical stirring process may be performed using a stirring device such as a food processor, a homogenizer, a mixer, a kneader, a mulling machine, or an extruder. The stirring device preferably has a large torque so that the stirring is not hindered even when the viscosity of the gelatinized product increases during the mechanical stirring process. Examples of the stirring device having a large torque include a cutter mixer (e.g. Robot Coupe, BLIXER-5Plus, FMI Corporation).

The conditions of the mechanical stirring process can be appropriately determined depending on the state of the cooked rice, the type of stirring device, and the like. For example, the rotation speed under no load is preferably 1,000 to 3,000 rpm, more preferably 1,200 to 2,000 rpm, and even more preferably 1,500 to 1,800 rpm. Also, the optimum conditions can be selected as appropriate by reducing the rotation speed but taking a correspondingly longer time, or performing pressure molding while stirring with a low-speed screw at about 60 rpm.

As a result, a gel material of the high-amylose rice that has been cooked is obtained having a good texture and an appropriate hardness as a gel. Here, a good texture refers to the texture obtained in a state where the value of tan δ described below is small. An appropriate hardness as a gel refers to, for example, a hardness that is softer than agar.

The overall hardness of the gel material can be evaluated by the complex elastic modulus. The complex elastic modulus G* is the sum of an elastic component and a viscous component as described in Japanese Patent No. 5840904 B2, and represents an overall hardness. Specifically, the complex elastic modulus G* is represented by a vector length when the storage elastic modulus G' is taken as X axis and the loss elastic modulus G" is taken as the Y axis. The storage elastic modulus G' is elasticity information. The loss elastic modulus G" is viscosity information.

The complex elastic modulus G* of the gel material of the cooked rice used in the present invention is preferably 1,000 Pa or more, and more preferably 1,500 Pa or more. If the complex elastic modulus G* is too small, the hardness of the gel material becomes insufficient, and therefore, the bread product cannot be provided with a chewy texture in some cases. On the other hand, if the complex elastic modulus G* is too large, the gel material becomes too hard, and there is a concern that an inconvenience may occur such as the gel material being unable to be uniformly mixed with other materials, or a large load being applied to the stirring device even when uniform mixing can be achieved.

The texture of the gel material of the cooked rice used in the present invention can be comprehensively evaluated by the value of tan δ, which is a viscosity/elasticity ratio. As the value of tan δ becomes smaller, the properties of an elastic body become stronger. That is to say, the properties of an elastic body, which undergoes deformation according to an applied force and returns to the original shape upon removal of the applied force, become stronger. As the value of tan δ becomes larger, the properties of a viscous body become stronger. That is to say, the properties of a viscous body, which undergoes deformation according to an applied force and does not return to the original shape upon removal of the applied force, become stronger.

The viscosity/elasticity ratio tan δ is specifically calculated by the equation tan δ = G"/G'. The value of δ refers to the angle between the vector of the complex elastic modulus G* and the storage elastic modulus G' (X axis).

The viscosity/elasticity ratio tan δ of the gel material is preferably 0.3 or less, and more preferably 0.2 or less. When the viscosity/elasticity ratio tan δ is too large, that is to say, when the properties of a viscous body become dominant, the stirred gel material becomes a sol (paste). In some cases, a gel material that has become a paste is unable to provide the bread product with a sufficiently chewy texture.

The gel material described above maintains good hardness and texture even after storage. For example, the good hardness and texture described above are maintained even after about three days to two weeks at 4 to 25°C.

### (Rice flour)

In the breadmaking composition of the present invention, when the total amount of the high-amylose rice and the rice flour is 100 parts by mass, the rice flour is contained in an amount of 50 to 99.5 parts by mass. As a result of using the breadmaking composition and substituting all of the wheat flour used in conventional bread products with rice flour, it is possible to provide gluten-free bread products.

Rice flour is a powder obtained by pulverizing raw rice. The rice used as the raw material of the rice flour may be either non-glutinous rice or glutinous rice, but non-glutinous rice is particularly preferable. The non-glutinous rice may be, for example, Japonica rice, Indica rice, or Javanica rice, and further, may be rice of various varieties belonging thereto. Examples of rice varieties include, but are not limited to, Takanari, Mizuhochikara, Yumefuwari, and other varieties suitable as rice for rice flour, or ordinary varieties such as Koshihikari and Akitakomachi. In addition to the high-amylose rice described above, varieties having a medium or low amylose content may also be used. The rice flour may be a mixture of various varieties of rice flour. Further, the rice flour may be pregelatinized rice flour obtained by pregelatinizing rice by heating, followed by drying and processing into a powder.

### (Fats and oils)

The breadmaking composition of the present invention includes fats and oils.

The fats and oils may be either vegetable fats and oils or animal fats and oils, and may be appropriately selected according to the type of target bread product. The vegetable fats and oils may be any vegetable fat or oil, and the production method thereof is not particularly limited. Examples of vegetable fats and oils include rapeseed oil (canola oil and salad oil), soybean oil, sunflower seed oil, cottonseed oil, peanut oil, safflower oil, rice oil (rice bran oil), corn oil, safflower oil, olive oil, kapok oil, sesame oil, evening primrose oil, coconut oil, palm oil, palm kernel oil, shea oil, sal butter, cacao butter, coconut oil, perilla oil, lavender oil, mango kernel oil, and processed fats and oils made from at least one of these. The animal fats and oils may be any animal fat or oil, and the production method thereof is not particularly limited. Examples of animal fats and oils include beef tallow, lard, fish oil, whale oil, butter derived from dairy raw materials, milk fats such as fresh cream, and processed fats and oils made from at least one of these. Examples of processed fats and oils include hydrogenated oil, transesterified oil, and fractionated oil. Among these, vegetable fats and oils or functional fats and oils are preferable. Examples of functional fats and oils include functional vegetable fats and oils such as olive oil and coconut oil, and animal fats and oils such as docosahexaenoic acid (DHA) and eicosapentaenoic acid (EPA), and a combination of two or more of these can also be used. It is preferable to use fats and oils conventionally used in bread products such as butter (unsalted or salted), margarine, and shortening, as well as rice oil and the like. In particular, the use of butter is preferable from the perspective of providing superior gustatory sensations such as moistness and softness, as well as flavors and aromas to the bread product. Furthermore, rice oil is preferable because it is allergen-free, and has good compatibility with high-amylose rice and rice flour.

The content of the fats and oils included in the breadmaking composition is 1 to 60 parts by mass per 100 parts by mass of the high-amylose rice, and is more preferably 15 to 50 parts by mass.

### (Optional ingredients)

The breadmaking composition of the present invention contains high-amylose rice that has been cooked, rice flour, and fats and oils as required ingredients, and includes, when the total amount of the high-amylose rice and the rice flour is 100 parts by mass, the high-amylose rice at 0.5 to 50 parts by mass, and the rice flour at 50 to 99.5 parts by mass. The breadmaking composition may contain optional ingredients to an extent that they do not impair the effects of the present invention. The optional ingredients can be appropriately determined depending on the target bread product.

Therefore, depending on the type of the intended bread product, the optional ingredients include water, yeast, sweeteners, salt, powders, eggs, and the like.

Note that, for example, ingredients that do not form the dough (base) of the bread product, including the fruit puree or paste, dry fruits, and nuts in fruit bread, and the fillings and toppings in confectionery bread and dressed bread, are not considered essential ingredients or optional ingredients in the composition of the present invention.

The water added as the optional ingredient is water excluding the water contained in the high-amylose rice that has been cooked. The water may be, for example, water derived from beverages such as fruit juice, liqueur, milk, soy milk, coconut milk, almond milk, and the like.

Although dependent on the type of target bread product, the breadmaking composition of the present invention preferably contains water at 50 to 100 parts by mass, and more preferably 70 to 90 parts by mass per 100 total parts by mass of the high-amylose rice and the rice flour. Therefore, it is desirable to adjust the amount of water which is mixed as an optional ingredient so that, after being added to the amount of water contained in the high-amylose rice that has been cooked, which is an essential ingredient, the water content falls within the above ranges.

The yeast may be any yeast that can be used for bread fermentation. Typically, baker's yeast, that is to say, the Saccharomyces cerevisiae strain used in breadmaking is used. The yeast used in the present invention does not secrete proteins that produce gluten. Either or both of dry yeast and raw yeast can be used as the yeast.

The yeast may be a yeast which is included in a so-called fermented species. A fermented species is a fermented product obtained by fermenting and proliferating naturally existing yeast, and may include various microorganisms in addition to baker's yeast, such as lactic acid bacteria. Such fermented species may be mixed with the dough as a source of yeast.

The amount of yeast which is mixed can be appropriately adjusted depending on the type of target bread product, but generally, 2 to 7 parts by mass of yeast is used per 100 parts by mass of the rice flour in dry weight.

Examples of the sweetener include sugars such as sugar (sucrose), glucose (D-glucose), fructose (D-fructose), maltose, lactose, D-galactose, D-mannose, D-ribose, D-xylose, L-arabinose, and monosaccharides classified as rare sugars (such as L-allose, L-gulose, L-glucose, L-galactose, L-altrose, L-idose, L-mannose, L-talose, D-talose, D-idose, D-altrose, D-gulose, D-allose, L-psicose, L-sorbose, L-fructose, L-tagatose, D-tagatose, D-sorbose, D-psicose, and L-ribose), trehalose, dextrin, starch syrup, and isomerized sugars; sugar alcohols such as sorbitol, maltitol, lactitol, sugar alcohols derived from monosaccharides classified as rare sugars (such as xylitol and erythritol); and non-sugar sweeteners such as aspartame, sucralose, acesulfame K, stevioside, thaumatin, glycyrrhizin, saccharin, and dihydrochalcone.

Of the sweeteners above, it is preferable to use sugar because it serves as a nutrient source of the yeast, and promotes fermentation.

The salt mentioned above refers to a food grade or pharmaceutical grade salt containing sodium chloride as the main component. In addition to sodium chloride as the main component, the salt may contain inorganic salts such as potassium chloride, calcium chloride, and magnesium chloride. For example, in addition to high-purity salts (such as purified salt) having a sodium chloride content of 99 mass % or more in dry mass that substantially do not contain the inorganic salts mentioned above, it is possible to use unpurified salts having a sodium chloride content of less than 99% that contain a considerable amount of the inorganic salts mentioned above.

The powders mentioned above that serve as an optional ingredient are powders excluding rice flour, which is an essential ingredient, and examples include almond poudre (almond powder), cocoa powder, tapioca powder, kinako powder, and chestnut powder.

In addition to using whole eggs, the egg white and the egg yolk of the egg can be used individually depending on the type of target bread product. In the present invention, from the viewpoint of producing an allergy-free bread product, it is preferable not to use eggs, and further, from the viewpoint of increasing the swelling rate of bread dough without using a swelling agent, it is preferable to use whole eggs or egg white.

The breadmaking composition of the present invention is preferably gluten-free from the viewpoint of producing a bread product that can be consumed by wheat allergy patients and the like. Therefore, it is preferable that the optional ingredients mentioned above do not contain gluten, gluten-containing ingredients, or proteins capable of producing gluten.

In the present invention, gluten includes wheat gluten derived from wheat flour and gluten-like proteins derived from other types of flour. Gluten and gluten-like proteins are produced by a reaction of the proteins contained in grain in the presence of water. Examples of proteins that form gluten-like proteins include hordein in barley, secalin in rye, and avenin in oats.

### (Bread product)

The bread product produced using the breadmaking composition of the present invention is not particularly limited as long as it is a fermented bread which is voluminous and has softness and moistness as important gustatory sensations.

Specific examples of such a fermented bread include baked bread such as loaf bread, English muffins, and brioches; molded breads such as croissants, focaccia, and bagels; flat breads such as naan and pita; steamed breads such as steamed buns filled with bean paste and steamed stuffed buns; confectionery bread such as bread filled with bean paste or cream; and dressed bread such as pizza bread.

Among these, from the viewpoint of being able to prepare a bread dough having superior fluidity, the breadmaking composition of the present invention is suitable for producing mold-baked bread, and particularly loaf bread.

### (Production method of bread product)

It is possible to use the breadmaking composition of the present invention to produce bread products using conventionally known procedures according to the target bread product. In the present invention, it is preferable to use the high-amylose rice that has been cooked in a gel state in order to obtain the superior effects of the high-amylose rice.

Furthermore, when the gel material is mixed with other ingredients, it is preferable to heat the gel material of the high-amylose rice that has been cooked at a temperature of 80 to 90°C for 1 minute or more to lower its viscosity. The heating causes the gel material of the high-amylose rice that has been cooked to become a sol (a paste having fluidity), and it is possible to avoid lumps when it is mixed with the other ingredients.

When the gel material is used, the gel material can be mixed with rice flour, fats and oils, and if necessary, the optional ingredients mentioned above. The conditions under which the ingredients are mixed are not particularly limited. For example, the gel material and all other ingredients may be mixed in one step, and further, it is also possible to prepare in advance a kneaded product prepared by mixing rice flour and water, and a mixture prepared by mixing fats and oils with the gel material, and then further mix the kneaded product and the mixture. As a result of using the gel material, the high-amylose rice that has been cooked and the rice flour become well-blended, and the breadmaking composition of the present invention can be mixed very finely and uniformly. As a result, when baked, it is possible to obtain a bread product having a large swelling, and a fine and moist texture. Moreover, the texture also has an excellent persistence.

In the field of food processing, "mixing" refers to kneading a raw material mixture containing a powder and a liquid so as to uniformly disperse the ingredients.

The timing and method with which the yeast is mixed with the other ingredients of the breadmaking composition of the present invention are not particularly limited. For example, it may be mixed with the gel material of high-amylose rice that has been cooked in the beginning, mixed with the rice flour or an optional ingredient such as water, or mixed after mixing all of the ingredients other than the yeast, and further, the yeast may be added after initially mixing the dough, and then subjecting the dough to further mixing.

Moreover, yeast which has been subjected to preliminary fermentation may be added to the rice flour or the bread dough, and further, it is also possible to add yeast which has not been subjected to preliminary fermentation to the rice flour or the bread dough.

The dough obtained in this manner may be placed into a mold or shaped, and the target bread product can be obtained by additional fermentation if necessary, followed by heating.

The heating method and heating temperature can be appropriately selected depending on the type of bread product, the composition of the bread dough, and the like, and examples include baking at 150 to 180°C for about 20 to 50 minutes, and heating in a steamer for about 15 to 30 minutes.

The series of operations from preparing the bread dough from the breadmaking composition of the present invention to heating the bread dough can be continuously performed in a single home bakery or bread production line.

When producing a gluten-free bread product from the breadmaking composition of the present invention, a production line dedicated to gluten-free products is typically used. This is because it is possible to prevent contamination by wheat flour, gluten, and the like.

As described above, by using the breadmaking composition of the present invention, it is possible to produce a gluten-free fermented bread that has good gustatory sensations and does not readily age without using gluten. However, it is of course possible to apply the breadmaking composition of the present invention to bread products containing gluten. For example, it can be used in bread products containing wheat flour or rye as a main ingredient, and similar effects can be obtained. Examples

The present invention will be specifically described by the following examples, but the present invention is not limited to the following examples.

### <Example 1>

As the breadmaking composition, rice flour (product name: Rice Flour F - rice flour for bread containing Mizuhochikara produced in Kumamoto, manufacturer: Kumamoto Flour Milling Co., Ltd.), rice oil, dry yeast (product name: Instant Dry Yeast Gold, manufacturer: Lesaffre), sugar, salt, and a gel material (product name: Rice Gelée Hard Type, manufacturer: Rice Technology Kawachi Co., Ltd.) obtained by cooking and mechanically stirring a white rice of high-amylose rice (amylose content of 25 mass % or more) were prepared.

The gel material was obtained by cooking high-amylose rice and water in a weight ratio of 1:2, and mechanically stirring the cooked rice to cause a phase transition to a gel. The gel material was refrigerated and stored at a temperature of 0 to 10°C until immediately before use.

Furthermore, a home bakery (product name: Tiger IH Home Bakery Yakitate KBD-X100, manufacturer: Tiger Corporation) for mixing and baking bread dough was prepared.

### [Production procedure of loaf bread]

### (Formation of sol of gel material)

The gel material of the high-amylose rice that has been cooked was taken out of the refrigerator and heated in a hot water bath. Use of the hot water bath was continued until the core temperature of the gel material reached 85°C, and this state was maintained for 5 minutes or more so that the gel material became a sol (paste) that was soft enough to flow.

### (Preliminary mixing)

A preliminary mixture was obtained by transferring 75 g of the sol material described above, and then blending in 8 g of rice oil.

### (Preliminary kneading)

To another container was added 225 g of rice flour, followed by water until the amount was as shown in Table 1, and the mixture was further kneaded to obtain a preliminary kneaded product.

### (Mixing)

To the above preliminary kneaded product was added the preliminary mixture from above, 4.5 g of dry yeast, 24 g of sugar, and 4 g of salt, and these were mixed together until well-blended using a rubber spatula.

### (Fermentation)

Fermentation was performed for 30 minutes using the "rice flour bread dough (no wheat)" menu of the home bakery.

### (Baking)

The gluten-free loaf bread was produced by baking at 165°C for 30 minutes using the above settings of the home bakery.

### [Evaluation of gustatory sensations]

The moistness and softness of the obtained loaf bread was evaluated directly after production and after being stored at room temperature for 3 days by a panel of ten people according to the following evaluation criteria. The results are shown in Table 1.

### (Moistness)

Excellent: No dryness and very moist
Good: No dryness and moist
Fair: Some dryness
Poor: Significant dryness

Acceptable evaluations for bread products are "Excellent" and "Good".

### (Softness)

Excellent: Fluffy and very soft
Good: Fluffy and soft
Fair: Somewhat hard
Poor: Hard

Acceptable evaluations for bread products are "Excellent" and "Good".

### <Examples 2 and 3>

The same breadmaking composition as in Example 1 was prepared, except that the amounts of the ingredients in the mixture were changed to the amounts shown in Table 1.

Furthermore, the gluten-free loaf bread was produced in the same manner as in Example 1, except that the fermentation step was performed using a fermenter (product name: Dough-Rec APSDC3-32S2, manufacturer: Aikosha Manufacturing Co., Ltd.), and the baking step was performed using an oven (product name: Convection Baking Oven Econo EC6.0604, manufacturer: Aikosha Manufacturing Co., Ltd.).

The various evaluations were performed with respect to the loaf bread that was produced in the same manner as in Example 1. The results are shown in Table 1.

### <Example 4>

The same breadmaking composition as in Example 1 was prepared, except that the amounts of the ingredients in the mixture were changed to the amounts shown in Table 1, and the gluten-free loaf bread was produced in the same manner as in Example 1.

Various evaluations were performed with respect to the loaf bread that was produced in the same manner as in Example 1. The results are shown in Table 1.

### <Reference example>

The same breadmaking composition as in Example 1 was prepared, except that the gel material was not used, and the amounts of the ingredients in the mixture were changed to the amounts shown in Table 1.

Furthermore, the gluten-free loaf bread was produced in the same manner as in Example 1, except that the fermentation step and the baking step were performed by the "rice flour bread (no wheat)" menu of the Home Bakery SD-BH1001 manufactured by Panasonic Corporation.

**[Table 1]**

| | | Example 1 | Example 2 | Example 3 | Example 4 | Reference Example |
|---|---|---|---|---|---|---|
| Rice flour | Amount mixed (g) | 225 | 225 | 225 | 225 | 280 |
| Gel material | Amount mixed (g) | 75 | 75 | 75 | 75 | 0 |
| | High-amylose rice content (a) | 25 | 25 | 25 | 25 | 0 |
| | High-amylose rice content per 100 total parts by mass of high-amylose rice and rice flour (parts by mass) | 10 | 10 | 10 | 10 | 0 |
| Fats and oils | Amount mixed (g) | 8 | 12 | 4 | 4 | 10 |
| Water | Amount mixed (g) | 220 | 220 | 220 | 195 | 188 |
| Evaluation | Moistness (immediately after production) | Excellent | Excellent | Excellent | Excellent | Good |
| | Moistness (after three days of storage) | Good | Good | Good | Good | Poor |
| | Softness (immediately after production) | Excellent | Excellent | Excellent | Excellent | Fair |
| | Softness (after three days of storage) | Good | Good | Good | Good | Poor |

## Claims

1. A breadmaking composition containing high-amylose rice that has been cooked, rice flour, and fats and oils, wherein
when a total amount of the high-amylose rice and the rice flour is 100 parts by mass, the high-amylose rice is contained in an amount of 0.5 to 50 parts by mass, and the rice flour is contained in an amount of 50 to 99.5 parts by mass.

2. The breadmaking composition according to claim 1, wherein
when the total amount of the high-amylose rice and the rice flour is 100 parts by mass, the high-amylose rice is contained in an amount of 0.5 to 15 parts by mass.

3. The breadmaking composition according to claim 1 or 2, wherein
water is contained in an amount of 50 to 100 parts by mass per 100 parts by mass of the high-amylose rice and the rice flour in total.
